# EUROPÄISCHE PATENTSCHRIFT

(11) **EP 0 827 694 B1**
(45) Veröffentlichungstag und Bekanntmachung des Hinweises auf die Patenterteilung: **09.06.2004**
(21) Anmeldenummer: 97111956.5
(22) Anmeldetag: 14.07.1997
(51) Int. Cl.: A22C 7/00

(54) **Vorrichtung und Verfahren zur Herstellung von scheibenförmigen Formlingen aus einer fliessfähigen Masse sowie Ausgabevorrichtung hierfür**
Device and method for making disc-shaped products from a flowable mass and moulding apparatus therefor
Dispositif et procédé de fabrication de produits moulés en forme de disque à partir d'une masse fluide et dispositif de moulage à cet effet

(30) Priorität: 10.09.1996 DE 19636749; 31.01.1997 DE 19703632
(43) Veröffentlichungstag der Anmeldung: 11.03.1998
(60) Teilanmeldung: 02022794.8
(73) Patentinhaber: Heinrich Frey Maschinenbau GmbH, 89542 Herbrechtingen-Bolheim (DE)
(72) Erfinder: Frey, Albert, 89542 Herbrechtingen (DE)
(74) Vertreter: Thul, Stephan, Dipl.-Phys.

(56) Entgegenhaltungen:
- EP-A- 0 405 697
- WO-A-90/03736
- CH-A- 506 332
- FR-A- 2 713 047
- US-A- 2 757 411
- US-A- 4 229 859
- US-A- 4 801 097

## Beschreibung

Die vorliegende Erfindung betrifft eine Vorrichtung und ein Verfahren zur Herstellung von scheibenförmigen Formlingen aus einer fließfähigen Masse, insbesondere Hackfleischscheiben aus einer Hackfleischmasse für Schabfleischspieße, nach dem Oberbegriff von Anspruch 1 bzw. Anspruch 10.

Schabfleischspieße, die hauptsächlich unter der Bezeichnung "Döner Kebab" bekannt sind, sind üblicherweise so aufgebaut, dass flache Hackfleischscheiben im Wechsel mit dünnen Fleischscheiben, die der Armierung dienen, auf einen Spieß gesteckt werden. Der Durchmesser der aufgesteckten Scheiben nimmt dabei zu einem Ende des Spießes hin kontinuierlich zu, so dass ein kompakter konischer Fleischspieß entsteht. Von dem senkrecht in einer Grillvorrichtung rotierbaren Fleischspieß werden dann schichtweise mit einem Messer gegrillte Fleischstücke zum Verzehr abgeschnitten.

Bisher werden derartige Schabfleischspieße vollständig von Hand aufgebaut. Hierzu wird ein Hackfleischballen auf einen Tisch gelegt und von Hand in Hackfleischscheiben der gewünschten Form und Größe zerteilt. Die von Hand hergestellten Hackfleischformlinge werden dann abwechselnd mit Fleischscheiben auf den Spieß gesteckt. Es ist einleuchtend, dass diese Art der Herstellung sehr kostenintensiv ist. Darüber hinaus ist es schwierig, von Hand Hackfleischscheiben mit entsprechend der gewünschten konischen Form des Schabfleischspießes zunehmendem Durchmesser herzustellen.

Eine Vorrichtung der eingangs genannten Art ist aus der CH-A-506 332 bekannt. Mit dieser Vorrichtung können Gegenstände aus plastischem Material geformt werden, indem dieses Material mit einem bestimmten Druck in eine Formöffnung eingepresst wird. Das Einpressen wird beendet, sobald das Material in der Formöffnung einen bestimmten Druck erreicht hat.

Der Erfindung liegt die Aufgabe zugrunde, eine Vorrichtung und ein Verfahren zur Herstellung von scheibenförmigen Formlingen der eingangs genannten Art anzugeben, durch welche die Herstellung derartiger Schabfleischspieße zumindest zum Teil automatisiert durchgeführt werden kann.

Diese Aufgabe wird zum einen durch die Vorrichtung nach Anspruch 1 gelöst.

Zum anderen wird die Aufgabe durch das Verfahren nach Anspruch 10 gelöst.

Durch die erfindungsgemäße Vorrichtung und das erfindungsgemäße Verfahren wird in einfacher und geschickter Weise eine automatische Herstellung von scheibenförmigen Formlingen aus einer vorbereiteten Hackfleischmasse ermöglicht. Die Herstellung von Schabfleischspießen kann dadurch gegenüber der bisherigen, rein manuellen Herstellung deutlich beschleunigt und verbilligt werden.

Bevorzugt kann als Ausgabevorrichtung für die portionierte Hackfleischmasse eine Vakuum- oder Kolbenfüllmaschine vorgesehen sein, wie sie beispielsweise für die Wurstherstellung Verwendung findet. Durch die Verwendung einer vorhandenen und bewährten Maschine wird eine hohe Funktionssicherheit bei gleichzeitig niedrigen Kosten erreicht.

Durch Verändern der Größe der ausgegebenen Portionen läßt sich mit der erfindungsgemäßen Vorrichtung und bei dem erfindungsgemäßen Verfahren in einfacher Weise der Durchmesser der hergestellten Formlinge verändern. Bevorzugt kann dabei auch die Dicke der Formlinge zusammen mit dem Durchmesser verändert werden.

Durch die in Anspruch 2 angegebenen Mittel wird die Handhabung der erfindungsgemäßen Vorrichtung weiter vereinfacht, indem eine gewünschte Portionsgröße aus dem Speicher bei Bedarf abgerufen werden kann. Grundsätzlich ist es dabei möglich, verschiedene Portionsgrößen werksseitig in den Speicher einzugeben. Bevorzugt ist es jedoch, wenn zusätzlich Mittel zum Eingeben von Portionsgrößen in den Speicher vorhanden sind. Die Portionsgrößen können dann vorteilhafterweise von dem Benutzer nach eigenen Wünschen eingegeben werden.

Nach einer Ausgestaltung der Erfindung ist mindestens eine Abfolge von Portionsgrößen speicherbar. So können beispielsweise für die Herstellung von Schabfleischspießen abnehmende Portionsgrößen als Abfolge gespeichert werden, um die übliche konische Form der Schabfleischspieße automatisch zu erzeugen. Bevorzugt können hierbei mehrere Abfolgen speicherbar sein, um verschiedene Formen nach Bedarf abrufen zu können.

Erfindungsgemäß können in der Abfolge beispielsweise die Dicke der Formlinge, deren Durchmesser und deren Anzahl variierbar sein. Auf diese Weise ist eine weite Variationsmöglichkeit gegeben, beispielsweise können Schabfleischspieße unterschiedlicher Form und Größe automatisch und einfach abrufbar sein.

Durch eine nach unten weisend am Ende eines an der Ausgabevorrichtung vorhandenen Füllrohres vorgesehene Ausgabeöffnung erreicht man eine gute Zugänglichkeit der Ausgabeöffnung, so daß die Auflage für die Hackfleischmasse in einfacher Weise unter der Ausgabeöffnung positionierbar ist.

Nach einer weiteren Ausgestaltung der Erfindung ist als Auflage für die Hackfleischmasse mindestens ein bevorzugt in der Höhe verstellbarer Teller vorgesehen. Insbesondere sind mehrere Teller auf einem bevorzugt fahrbar ausgebildeten Gestell angeordnet und auf diesem abwechselnd unter die Ausgabeöffnung verfahrbar. Die Teller können dadurch nacheinander unter der Ausgabeöffnung angeordnet werden, um in rascher Folge Hackfleischscheiben in gewünschter Weise herzustellen.

Nach einer weiteren Ausgestaltung der Erfindung sind die Teller bevorzugt mit einem nach unten weisenden Stift in einer Hülse gelagert, welche auf einer auf dem Gestell angebrachten Förde reinrichtung befestigt ist. Die Teller können dadurch schnell und einfach zur Reinigung oder zum Ersatz von dem Gestell entnommen werden.

Das automatische Verfahren der Teller wird nach einer weiteren Ausgestaltung der Erfindung bevorzugt dadurch ermöglicht, daß die Hülsen jeweils aufrecht um eine Ausnehmung einer kreisförmigen Scheibe angeordnet sind, wobei die in einer gemeinsamen Führungsbahn verschiebbar eingesetzten angeordneten Scheiben durch mindestens ein zu ihrem Umfang reziprok ausgebildetes Zahnrad antreibbar sind. Auch die zum Antrieb der Teller dienenden Scheiben sind dadurch zur Reinigung oder zum Ersatz leicht aus dem Gestell entnehmbar. Die Verwendung einer schlecht reinigbaren Kette wird vermieden. Bevorzugt bestehen die Scheiben aus Kunststoff, was ebenfalls der leichten Reinigung und Handhabbarkeit zugute kommt.

Durch einen unterhalb der Ausgabeöffnung angeordneten Hubzylinder, der von unten in die Hülse der jeweils unter der Ausgabeöffnung angeordneten Scheibe einführbar ist, kann der Teller in einfacher und geschickter Weise angehoben und abgesenkt werden, um die zur Ausbildung des Formlings erforderliche Position einzunehmen, in welcher die Hackfleischmasse zwischen Teller und Gegenplatte komprimiert wird. An dem Teller kann dabei auch ein in Richtung auf die Ausgabeöffnung bzw. die Gegenplatte vorgespanntes Federelement angreifen.

Nach einer weiteren Ausgestaltung der Erfindung ist als Auflage ein auf einem Gestell angeordnetes, umlaufendes Endlosband vorgesehen, welches sich mit jeweils einem Abschnitt unterhalb der Ausgabeöffnung befindet. Zur Formung der Hackfleischscheibe ist bevorzugt zumindest der unter der Ausgabeöffnung befindliche Abschnitt des Bandes heb- und senkbar ausgestaltet. Alternativ kann aber auch die Ausgabeöffnung mitsamt der Gegenplatte heb- und senkbar sein.

Auch bei diesen Ausgestaltungen der Erfindung können Hackfleischscheiben durch entsprechendes Heben und Senken des Endlosbandes bzw. der Ausgabeöffnung mitsamt der Gegenplatte ausgeformt werden.

Nach einer weiteren Ausgestaltung der Erfindung ist an der Gegenplatte eine Abschneidvorrichtung mit einem durch einen Rollenschlitten verfahrbaren, bevorzugt austauschbaren Messer vorgesehen. Mit der Abschneidvorrichtung kann der Formling nach beendeter Komprimierung der Hackfleischmasse sauber von der Gegenplatte gelöst werden. Durch eine bevorzugt federnd gelagerte Abstreifvorrichtung für das Messer kann dieses in vorteilhafter Weise sauber gehalten werden.

Um eine manuelle Entnahme der fertigen Formlinge von den Tellern zu ermöglichen, ist an dem Gestell nach einer weiteren Ausgestaltung der Erfindung mindestens ein Arbeitsplatz ausgebildet. An diesem Arbeitsplatz kann der fertige Formling von dem jeweiligen Teller entnommen werden, um diesen abwechselnd mit den Fleischscheiben auf einen Spieß aufzubringen.

Zur Ausbildung des Formlings kann die Auflage, ausgehend von einer unteren Position, nach beendeter Ausgabe einer Hackfleischportion unter Komprimierung der Masse angehoben werden. Die Auflage wird also zunächst unterhalb der Ausgabeöffnung angeordnet und erst anschließend nach Ausgabe der jeweiligen Portion angehoben. Eine andere Möglichkeit besteht darin, die Auflage vor Beginn der Ausgabe einer Portion direkt benachbart zur Ausgabeöffnung anzuordnen und die Auflage durch den Druck der ausgegebenen Masse entgegen einer Vorspannung nach unten zu drücken. Auch auf diese Weise wird die Masse zwischen Auflage und Gegenplatte komprimiert.

Des weiteren besteht auch die Möglichkeit, die Auflage vor dem Ausgeben einer Portion in einem der Solldicke des Formlings entsprechenden Abstand zur Gegenplatte anzuordnen und sie dort während der Ausgabe zu halten. Durch Herausdrücken der vollständigen Portion aus der Ausgabeöffnung wird so ebenfalls eine Komprimierung der Masse zwischen Auflage und Gegenplatte und eine Ausbildung der gewünschten Form erreicht.

Schließlich besteht auch die Möglichkeit, anstelle der Auflage die Ausgabeöffnung mitsamt Gegenfläche entsprechend den drei zuvor beschriebenen Varianten zu bewegen, also entweder erst nach dem Ausgeben einer Hackfleischportion nach unten zu fahren, um die Hackfleischmasse zu komprimieren, oder bereits vor dem Ausgeben der Portion in einer abgesenkten Position zu halten, in welcher der Abstand zur Auflage der gewünschten Dicke der Hackfleisscheibe entspricht oder sich durch elastisches Zurückweichen einer der beiden Elemente einstellt.

Ausführungsbeispiele der Erfindung sind in der Zeichnung dargestellt und werden nachfolgend beschrieben. Es zeigen, jeweils in schematischer Darstellung,
- Fig. 1: eine Seitenansicht einer erfindungsgemäßen Vorrichtung,
- Fig. 2: eine um 90° gedrehte Seitenansicht der Vorrichtung von Fig. 1,
- Fig. 3: eine Draufsicht auf die Oberseite der Vorrichtung von Fig. 1, und
- Fig. 4: eine Draufsicht auf die Eingabetastatur einer erfindungsgemäßen Ausgabevorrichtung.

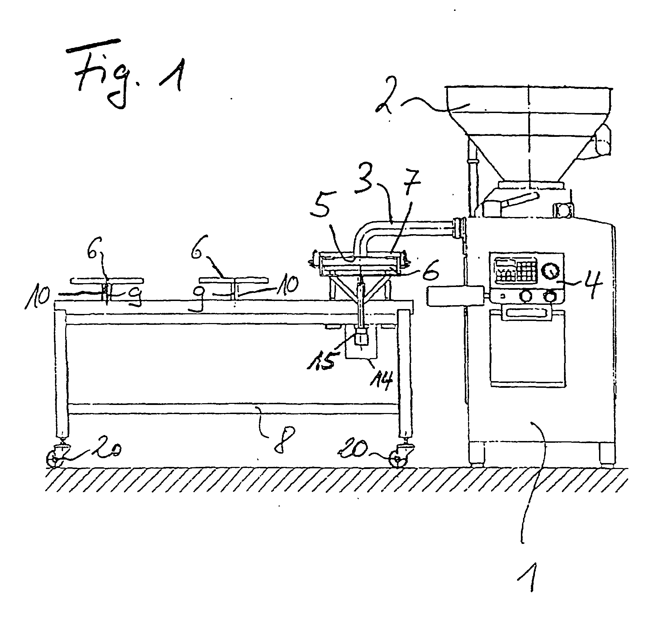

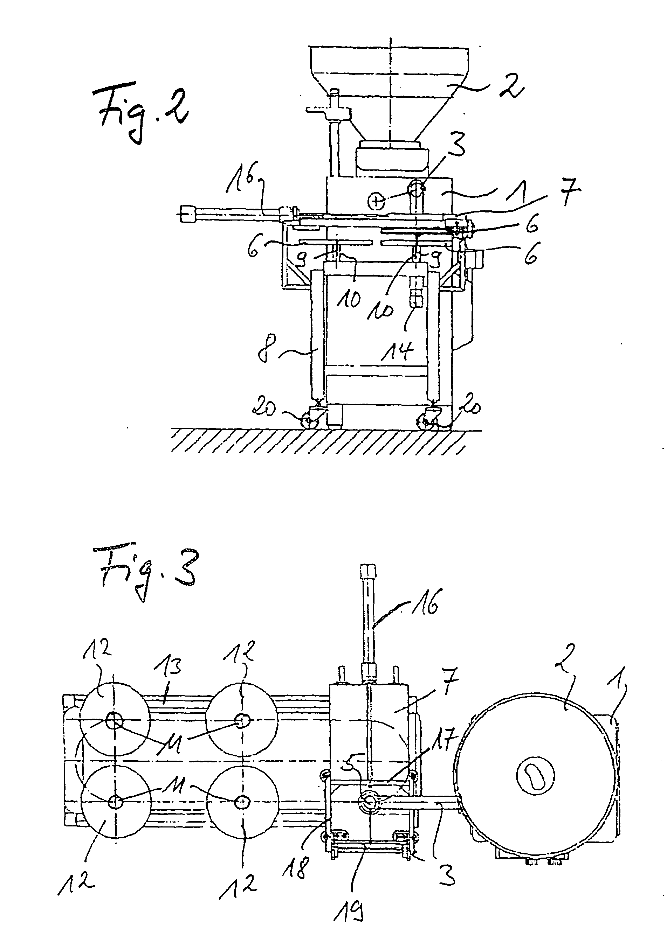

Die in den Fig. 1 bis 4 dargestellte erfindungsgemäße Vorrichtung umfaßt eine als Ausgabevorrichtung dienende Vakuum- oder Kolbenfüllmaschine 1, wie sie zur Wurstherstellung bekannt ist. Die Füllmaschine 1 weist einen Einfülltrichter 2 zum Eingeben und gegebenenfalls Vermengen einer Hackfleischmasse auf, aus welchem die fertige Hackfleischmasse über eine hier nicht erkennbare Fördereinrichtung in ein Füllrohr 3 gefördert wird. Über eine Steuereinrichtung 4 ist eine portionsweise Ausgabe der Hackfleischmasse durch das Füllrohr 3 möglich.

Das Füllrohr 3 ist nach unten abgewinkelt und weist eine nach unten weisende Ausgabeöffnung 5 auf, aus welcher die Hackfleischmasse auf einen unterhalb der Ausgabeöffnung 5 angeordneten Teller 6 ausgegeben werden kann. Dem Teller 6 gegenüberliegend und die Ausgabeöffnung 5 umgebend ist am Ende des Füllrohres 3 eine Gegenplatte 7 vorgesehen, die zusammen mit dem Teller 6 zur Komprimierung der ausgegebenen Hackfleischmasse und Ausformung der Hackfleischscheibe dient.

Der Teller 6 ist zusammen mit weiteren Tellern 6 - im dargestellten Ausführungsbeispiel sind es insgesamt sechs Teller 6 - auf einem fahrbar ausgebildeten Gestell 8 angeordnet. Die Teller 6 sind jeweils mit nach unten weisenden Stiften 9 in einer Hülse 10 gelagert, die um eine Öffnung 11 auf einer Scheibe 12 befestigt ist. Im dargestellten Ausführungsbeispiel sind also auch sechs Scheiben 12 vorhanden. Diese sind längs einer geschlossenen ovalen Bahn 13 verschiebbar geführt, wobei zur Verschiebung der Scheiben 12 längs der Bahn 13 mindestens ein zum Umfang der Scheiben 12 reziprok ausgebildetes, hier nicht dargestelltes Zahnrad vorgesehen sein kann, welches mit den Scheiben 12 kämmend rotiert. Durch Verschieben der Scheiben 12 längs der Führungsbahn 13 können die Teller 6 nacheinander unter die Ausgabeöffnung 5 der Füllmaschine 1 verfahren werden.

Unterhalb der Ausgabeöffnung 5 des Füllrohres 3 und unterhalb der Ebene der Scheiben 12 ist an dem Gestell 8 eine Hubvorrichtung 14 mit einem Hubzylinder 15 angeordnet, der von unten her durch die Ausnehmung 11 der Scheibe 12 in die Hülse 10 einfahrbar ist. Die Hubvorrichtung 14 ist so ausgestaltet, daß der Hubzylinder 15 den Teller 6 über den Stift 9 auf eine gewünschte Höhe einstellen kann.

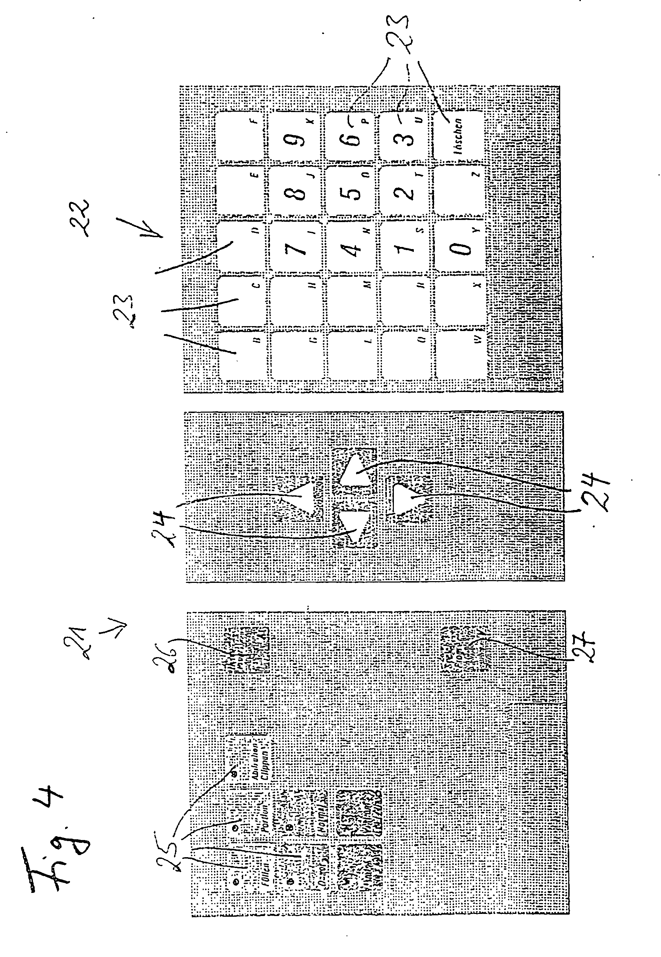

Der Hubzylinder 15 ist durch die an der Füllmaschine 1 vorhandene Steuerung 4 in Abhängigkeit von der gewünschten Größe des Formlings steuerbar. Die Eingabetastatur 21 der Steuerung 4 ist im einzelnen in Fig. 4 dargestellt. Sie umfaßt ein alphanumerisches Tastenfeld 22 mit fünfundzwanzig Eingabetasten 23, von denen eine als Löschtaste ausgeführt ist, vier Pfeiltasten 24, sieben Funktionstasten 25 sowie eine Abruftaste 26 und eine Speichertaste 27 zum Abrufen bzw. Speichern einer eingegebenen Abfolge von Portionsgrößen. Außerdem umfaßt die Steuerung 4 eine nur in Fig. 1 angedeutete Anzeigevorrichtung 28. Die Tasten 23 bis 27 sind bevorzugt als Folientastatur ausgebildet, die Anzeigevorrichtung ist bevorzugt eine Flüssigkristallanzeige.

Über die Pfeiltasten 24 können verschiedene Programmpunkte wie Eingabemenü und Eingabegröße ausgewählt werden. Über die alphanumerische Tastatur 22 können Eingabewerte, wie beispielsweise ein gewünschtes Gewicht und ein gewünschter Durchmesser der Formlinge sowie die Anzahl der so herzustellenden Formlinge eingegeben werden, wobei diese Eingaben mit der Löschtaste gelöscht werden können. Eine derartige Abfolge kann zum Beispiel zehn Formlinge umfassen, deren Durchmesser und/oder Dicke kontinuierlich abnimmt. Wie bereits ausgeführt, kann ein im Speicher vorhandenes Programm durch die Abruftaste 26 abgerufen werden, während mit der Speichertaste 27 ein über die Eingabetastatur 21 erstelltes Programm im Speicher ablegbar ist. Die übrigen Funktionstasten 25 sind anderen Steuergrößen zugeordnet, wie beispielsweise Ein- und Ausschalten der Pumpe und der Einstellung der Betriebsweise der Vorrichtung.

Mit der erfindungsgemäßen Vorrichtung und der erfindungsgemäßen Ausgabevorrichtung können Abfolgen von unterschiedlichen auszugebenden Portionen, die zuvor gespeichert wurden, abgerufen und automatisch ausgeführt werden. Daher können beispielsweise verschiedene Schabfleischspieße nacheinander durch Abrufen des entsprechenden Programms einfach hergestellt werden. Die Eingabe kann insbesondere durch eine geschulte Person erfolgen, während das Abrufen eines bestimmten Programmes keine besondere Einweisung erfordert.

Wie zuvor beschrieben, kann der Teller dabei entweder erst nach der Ausgabe einer Hackfleischportion zur Komprimierung der Masse zwischen Teller 6 und Gegenplatte 7 angehoben werden oder der Teller 6 kann bereits vor Ausgabe der Hackfleischportion angehoben werden, und zwar entweder so, daß er einen Abstand zu der Gegenplatte 7 aufweist, der der gewünschten Dicke des Formlings entspricht oder aber der Ausgabeöffnung 5 des Füllrohres 3 direkt benachbart. In diesem letzten Falle ist der Teller 6 zusätzlich durch ein Federelement abgestützt, so daß die Hackfleischmasse entgegen dieser Federkraft ausgegeben und dadurch zwischen Teller 6 und Gegenplatte 7 in der gewünschten Weise komprimiert wird.

Wie man insbesondere in Fig. 3 erkennt, ist an der Gegenplatte 7 eine Abschneidvorrichtung 16 für den fertiggestellten Formling von der Gegenplatte 7 vorgesehen. Die Abschneidvorrichtung 16 umfaßt ein austauschbares Messer 17, welches durch einen Rollenschlitten 18 so geführt ist, daß sich das Messer 17 längs der zum Teller 6 weisenden Unterseite der Gegenplatte 7 bewegt. An einem Ende der Bewegungsbahn des Messers 17 ist zudem eine Abstreifvorrichtung 19 angeordnet, in welche das Messer 17 am Ende jedes Abschneidvorganges einläuft. Durch einen federnd gelagerten Abstreifer wird dabei am Messer 17 haftende Hackfleischmasse entfernt.

Wie man in Fig. 1 erkennt, ist das Gestell 8 mit Rollen 20 versehen, so daß das Gestell beispielsweise zu Reinigungszwecken verfahrbar ist. Das Reinigen wird dadurch weiter erleichtert. Wie man in Fig. 3 erkennt, umfaßt das Gestell 8 im dargestellten Ausführungsbeispiel sechs Scheiben 12, die in einer oval geschlossenen Führungsbahn 13 verfahrbar sind. Jeweils zwei auf den Scheiben 12 angeordnete Teller 6 befinden sich beim Betrieb der erfindungsgemäßen Vorrichtung im Bereich der Füllmaschine 1, während sich die übrigen vier Teller 6 in einem frei zugänglichen Bereich des Gestells 8 befinden. Die Positionen der vier freien Teller 6 können daher als Arbeitsplätze eingerichtet sein, an denen die fertiggestellten Hackfleischscheiben insbesondere manuell von den Tellern 6 gelöst und auf Spieße aufgebracht werden können.

Zum Betrieb der erfindungsgemäßen Vorrichtung werden die Teller 6 nacheinander unterhalb der Ausgabeöffnung 5 positioniert. Daraufhin fährt der Hubzylinder 15 in die Hülse 10 ein und hebt den jeweiligen Teller 6 über den Stift 9 auf die gewünschte Höhe an. Von der Füllmaschine 1 wird dann eine Portion Hackfleischmasse auf den Teller 6 ausgegeben. Sofern sich der Teller 6 nicht gemäß einer der beiden oben beschriebenen Varianten ohnehin bereits in einer komprimierenden Stellung befindet, wird dann der Teller 6 durch den Druckzylinder 15 gemäß der dritten Variante weiter angehoben, um die Hackfleischmasse zwischen Teller 6 und Gegenplatte 7 in der gewünschten Weise zu komprimieren und dadurch eine Hackfleischscheibe mit gewünschter Dicke und Durchmesser herzustellen.

Nach Fertigstellung der Hackfleischscheibe wird diese durch Entlangfahren des Messers 17 an der Unterseite der Gegenplatte 7 von dieser gelöst, wobei das Messer bis in die Abstreifvorrichtung 19 weiterfährt, um von anhaftendem Hackfleisch gereinigt zu werden. Nach Lösen der Hackfleischscheibe von der Gegenplatte 7 wird der Hubzylinder 15 und damit der Teller 6 wieder abgesenkt. Nun wird der Teller 6 längs der Führungsbahn 13 weiter verfahren und ein neuer Teller 6 gelangt unter die Ausgabeöffnung 5 des Füllrohres 3, mit dem dann wieder in der zuvor beschriebenen Weise die nächste Hackfleischscheibe geformt wird usw.

Die Teller 6 laufen also gemeinsam längs der Führungsbahn 13 um und werden, sobald sie sich unter der Ausgabeöffnung 5 befinden, zur Ausbildung einer Hackfleischscheibe angehoben. An den vier außerhalb des Formbereichs gelegenen Positionen der Teller 6 werden die fertiggestellten Hackfleischscheiben beispielsweise mittels eines Messers von den Tellern 6 gelöst und auf vorbereitete Spieße gesteckt.

### Bezugszeichenliste

- 1: Füllmaschine
- 2: Einfülltrichter
- 3: Füllrohr
- 4: Steuerung
- 5: Ausgabeöffnung
- 6: Teller
- 7: Gegenplatte
- 8: Gestell
- 9: Stift
- 10: Hülse
- 11: Ausnehmung
- 12: Scheibe
- 13: Führungsbahn
- 14: Hubvorrichtung
- 15: Hubzylinder
- 16: Abschneidevorrichtung
- 17: Messer
- 18: Rollenschlitten
- 19: Abstreifvorrichtung
- 20: Rad
- 21: Eingabetastatur
- 22: alphanumerisches Tastenfeld
- 23: Eingabetaste
- 24: Pfeiltaste
- 25: Funktionstaste
- 26: Abruftaste
- 27: Speichertaste
- 28: Anzeigevorrichtung

## Patentansprüche

1. Vorrichtung zur Herstellung von scheibenförmigen Formlingen aus einer fließfähigen Masse, insbesondere Hackfleischscheiben aus einer Hackfleischmasse für Schabfleischspieße, mit
- einer zur Ausgabe von portionierten Mengen einer fließfähigen Masse über eine Ausgabeöffnung (5) ausgebildeten Ausgabevorrichtung (1), insbesondere Vakuum- oder Kolbenfüllmaschine, und
- Mitteln zum Komprimieren der Masse,
**gekennzeichnet durch**
- eine unter der Ausgabeöffnung (5) positionierbare Auflage (6),
- eine der Auflage (6) gegenüberliegend angeordnete Gegenplatte (7),
- Mittel (14) zum Komprimieren der Masse zwischen Auflage (6) und Gegenplatte (7),
- Mittel (16) zum Trennen des fertigen Formlings von der Gegenplatte (7) und
- Mittel (15) zum Auseinanderfahren von Auflage (6) und Gegenplatte (7) nach Fertigstellung des Formlings.

2. Vorrichtung nach Anspruch 1
**dadurch gekennzeichnet,**
**dass** die Größe der ausgegebenen Portionen veränderbar ist, wobei bevorzugt Mittel zum abrufbaren Speichern einer auszugebenden Portionsgröße und Mittel (21) zum Eingeben von Portionsgrößen in den Speicher vorgesehen sind, wobei insbesondere mindestens eine Abfolge von Portionsgrößen speicherbar ist, in welcher insbesondere die Dicke, der Durchmesser und/oder die Anzahl der Formlinge variierbar ist.

3. Vorrichtung nach Anspruch 1 oder 2,
**dadurch gekennzeichnet,**
**dass** die Ausgabeöffnung (5) nach unten weisend am Ende eines an der Ausgabeöffnung (1) vorhandenen Füllrohres (3) vorgesehen ist, und dass die Gegenplatte (7) die Ausgabeöffnung (5) umgebend ebenfalls am Ende des Füllrohres (3) angeordnet ist, wobei bevorzugt als Auflage mindestens ein bevorzugt in der Höhe verstellbarer Teller (6) vorgesehen ist, an welchem ebenfalls bevorzugt ein in Richtung auf die Ausgabeöffnung (5) vorgespanntes Federelement angreift.

4. Vorrichtung nach Anspruch 3,
**dadurch gekennzeichnet,**
**dass** mehrere Teller (6) auf einem bevorzugt fahrbaren Gestell (8) angeordnet und abwechselnd unter die Ausgabeöffnung (5) automatisch verfahrbar sind, wobei die Teller (6) insbesondere mit einem nach unten weisenden Stift (9) in einer Hülse (10) gelagert sind, welche auf einer auf dem Gestell (8) angebrachten Fördereinrichtung (12) befestigt ist.

5. Vorrichtung nach Anspruch 4,
**dadurch gekennzeichnet,**
**dass** die Hülsen (10) jeweils aufrecht um eine Ausnehmung (11) einer kreisförmigen Scheibe (12) angeordnet, und die in einer gemeinsamen Führungsbahn (13) verschiebbar eingesetzten Scheiben (12) durch mindestens ein zu ihrem Umfang reziprok ausgebildetes Zahnrad antreibbar sind, wobei bevorzugt unterhalb der Ausgabeöffnung (5) ein Hubzylinder (15) angeordnet ist, der von unten in die Hülse (10) der jeweils unter der Ausgabeöffnung (5) angeordneten Scheibe (12) einführbar ist, und durch den der jeweilige Teller (6) in der Höhe verschiebbar ist.

6. Vorrichtung nach Anspruch 3,
**dadurch gekennzeichnet,**
**dass** als Auflage ein auf einem Gestell angeordnetes, umlaufendes Endlosband vorgesehen ist, welches sich mit jeweils einem Abschnitt unterhalb der Ausgabeöffnung (5) befindet, wobei zumindest der unter der Ausgabeöffnung (5) befindliche Abschnitt des Bandes heb- und senkbar ist.

7. Vorrichtung nach einem der vorhergehenden Ansprüche,
**dadurch gekennzeichnet,**
**dass** die Ausgabeöffnung (5) mitsamt Gegenplatte (7) heb- und senkbar ist.

8. Vorrichtung nach einem der vorhergehenden Ansprüche,
**dadurch gekennzeichnet,**
**dass** an der Gegenplatte (7) eine Abschneidvorrichtung (16) mit einem durch einen Rollenschlitten (18) längs der Unterseite der Gegenplatte (7) verfahrbaren, bevorzugt austauschbaren Messer (17) vorgesehen ist, wobei insbesondere eine Abstreifvorrichtung (19) mit einem bevorzugt federnd gelagerten Abstreifer für das Messer (17) vorgesehen ist.

9. Vorrichtung nach einem der Ansprüche 4 bis 8,
**dadurch gekennzeichnet,**
**dass** an dem Gestell (8) mindestens ein Arbeitsplatz zur manuellen Entnahme der fertigen Formlinge von den Tellern (6) ausgebildet ist.

10. Verfahren zur Herstellung von scheibenförmigen Formlingen aus einer fließfähigen Masse, insbesondere von Hackfleischscheiben aus einer Hackfleischmasse für Schabfleischspieße, umfassend die Schritte:
- portionsweises Ausgeben der Masse durch eine Ausgabeöffnung (5) und
- Komprimieren der ausgegebenen Masse,
**gekennzeichnet durch** folgende Schritte:
- Ausgeben der Masse auf eine unter der Ausgabeöffnung (5) angeordnete Auflage (6),
- Komprimieren der ausgegebenen Masse zwischen der Auflage (6) und einer Gegenfläche (7),
- Trennen der komprimierten Masse von der Gegenfläche (7),
- Auseinanderfahren von Auflage (6) und Gegenfläche (7) und
- Trennen des fertigen Formlings von der Auflage (6).

11. Verfahren nach Anspruch 10,
**dadurch gekennzeichnet,**
**dass** die Größe der ausgegebenen Portion zur Erzeugung von Formlingen mit unterschiedlichem Durchmesser und/oder unterschiedlicher Dicke verändert wird.

12. Verfahren nach Anspruch 10 oder 11,
**dadurch gekennzeichnet,**
**dass** die Auflage (6) von einer unteren Position nach beendeter Ausgabe der Masse zur Komprimierung der Masse angehoben wird.

13. Verfahren nach Anspruch 10 oder 11,
**dadurch gekennzeichnet,**
**dass** die Auflage (6) vor dem Ausgeben einer Portion der Ausgabeöffnung (5) direkt benachbart angeordnet wird, und dass die Auflage (6) von der ausgegebenen Masse entgegen einer Vorspannung nach unten gedrückt wird.

14. Verfahren nach Anspruch 10 oder 11,
**dadurch gekennzeichnet,**
**dass** die Auflage (6) vor dem Ausgeben in einem der Solldicke des Formlings entsprechenden Abstand zur Gegenfläche (7) angeordnet und während der Ausgabe dort gehalten wird.

15. Verfahren nach einem der Ansprüche 12 bis 14,
**dadurch gekennzeichnet,**
**dass** anstelle der oder zusätzlich zur Auflage (6) die Ausgabeöffnung (5) mit Gegenfläche (7) bewegt wird.

16. Verfahren nach einem der Ansprüche 10 bis 15,
**dadurch gekennzeichnet,**
**dass** in einem Kreisprozess leere Auflagen (6) unter die Ausgabeöffnung (5) zugeführt und nach Fertigstellung der Formlinge zur Entnahme der Formlinge weggeführt werden.

## Claims

1. An apparatus for the manufacture of slice-like moulded parts from a flowable mass, in particular slices of minced meat from a mass of minced meat for carved meat spits, comprising
- a dispensing apparatus (1), in particular a vacuum filling machine or a piston filling machine, made for the dispensing of portioned amounts of a flowable mass via a dispensing opening (5); and
- means for the compressing of the mass,
**characterised by**
- a support (6) positionable beneath the dispensing opening (5);
- a counter plate (7) arranged opposite the support (6);
- means (14) for the compressing of the mass between the support (6) and the counter plate (7);
- means (16) for the separation of the finished moulded part from the counter plate (7); and
- means (15) for the moving apart of the support (6) and of the counter plate (7) after completion of the moulded part.

2. An apparatus in accordance with claim 1, **characterised in that** the size of the dispensed portions can be changed, with means preferably being provided for the call upable storage of a portion size to be dispensed and means (21) being provided for the inputting of portion sizes into the memory, with in particular at least one sequence of portion sizes being storable in which in particular the thickness, the diameter and/or the number of the moulded parts can be varied.

3. An apparatus in accordance with claim 1 or claim 2, **characterised in that** the dispensing opening (5) is provided pointing downwardly at the end of a filling tube (3) present at the dispensing opening (1); and **in that** the counter plate (7) is likewise arranged at the end of the filling tube (3) and surrounds the dispensing opening (5), with at least one plate (6), preferably a vertically adjustable plate, preferably being provided as a support and with a likewise preferably provided spring element biased in the direction of the dispensing opening (5) acting on the plate.

4. An apparatus in accordance with claim 3, **characterised in that** a plurality of plates (6) are arranged on a preferably movable frame (8) and can automatically be moved alternatively beneath the dispensing opening (5), with the plates (6) in particular being supported with a downwardly pointing pin (9) in a sleeve (10) which is secured to a conveying device (12) attached to the frame (8).

5. An apparatus in accordance with claim 4, **characterised in that** the sleeves (10) are each arranged upright around a cut-out (11) of a circular disc (12) and the discs (12), which are displaceably inserted in a common guide track (13), can be driven by at least one toothed wheel made reciprocal to their periphery, with a stroke cylinder (15) preferably being arranged beneath the dispensing opening (5) and being insertable from below into the sleeve (10) of the disc (12) respectively arranged beneath the dispensing opening (5) and with the respective plate (6) being vertically adjustable by it.

6. An apparatus in accordance with claim 3, **characterised in that** a circulating endless belt arranged on a frame is provided as a support, with a respective section of said endless belt being located beneath the dispensing opening (5), with at least the section of the belt located beneath the dispensing opening (5) being able to be raised and lowered.

7. An apparatus in accordance with any one of the preceding claims, **characterised in that** the dispensing opening (5) can be raised and lowered together with the counter plate (7).

8. An apparatus in accordance with any one of the preceding claims, **characterised in that** a cutting apparatus (16) with a blade (17), preferably a replaceable blade, which is movable by a roller carriage (18) along the lower side of the counter plate (7), is provided at the counter plate (7), with in particular a scraping apparatus (19) being provided which has a preferably resiliently supported scraper for the blade (17).

9. An apparatus in accordance with any one of claims 4 to 8, **characterised in that** at least one workplace is designed on the frame (8) for the manual removal of the finished moulded parts from the plates (6).

10. A method for the manufacture of slice-like moulded parts from a flowable mass, in particular of slices of minced meat from a mass of minced meat for carved meat spits, including the steps:
- portion-wise dispensing of the mass through a dispensing opening (5); and
- compressing the dispensed mass,
**characterised by** the following steps:
- dispensing of the mass onto a support (6) arranged beneath the dispensing opening (5);
- compressing the dispensed mass between the support (6) and a counter surface (7);
- separating the compressed mass from the counter surface (7);
- moving apart of the support (6) and of the counter surface (7); and
- separating the finished moulded part from the support (6).

11. A method in accordance with claim 10, **characterised in that** the size of the dispensed portion is changed for the production of moulded parts with different diameters and/or different thicknesses.

12. A method in accordance with claim 10 or claim 11, **characterised in that** the support (6) is raised for the compression of the mass from a lower position following the completed dispensing of the mass.

13. A method in accordance with claim 10 or claim 11, **characterised in that** the support (6) is arranged directly adjacent to the dispensing opening (5) prior to the dispensing of a portion; and **in that** the support (6) is pressed downwardly against a bias by the dispensed mass.

14. A method in accordance with claim 10 or claim 11, **characterised in that** the support (6) is arranged at a spacing from the counter surface (7) corresponding to the desired thickness of the shaped moulded part prior to the dispensing and is held there during the dispensing.

15. A method in accordance with any one of claims 12 to 14, **characterised in that**, instead of or in addition to the support (6), the dispensing opening (5) is moved with the counter surface (7).

16. A method in accordance with any one of claims 10 to 15, **characterised in that**, in a cyclic process, empty supports (6) are supplied beneath the dispensing opening (5) and are guided away for the removal of the moulded parts after the completion of the moulded parts.

## Revendications

1. Dispositif de fabrication de produits moulés en forme de tranche à partir d'une masse capable de fluer, en particulier de tranches de viande hachée à partir d'une masse de viande hachée pour des broches de viande à "racler" ou à "écroûter", comportant
- un dispositif de distribution (1), en particulier une machine de remplissage sous vide ou à piston, prévu pour distribuer des quantités mises en portions d'une masse capable de fluer via une ouverture de distribution (5), et
- des moyens pour comprimer la masse,
**caractérisé par**
- un support (6) susceptible d'être positionné au-dessous de l'ouverture de distribution (5),
- une contre-plaque (7) agencée à l'opposé du support (6),
- des moyens (14) pour comprimer la masse entre le support (6) et la contre-plaque (7),
- des moyens (16) pour séparer le produit moulé fini vis-à-vis de la contre-plaque (7), et
- des moyens (15) pour écarter le support (6) et la contre-plaque (7) après finition du produit moulé.

2. Dispositif selon la revendication 1, **caractérisé en ce que** la taille des portions distribuées est variable, des moyens étant prévus de préférence pour mémoriser de manière à pouvoir être appelée une taille de portion à distribuer, ainsi que des moyens (21) pour saisir des tailles de portion dans la mémoire, en particulier au moins une succession de tailles de portion pouvant être mémorisée, dans laquelle peuvent varier en particulier l'épaisseur, le diamètre et/ou le nombre des produits moulés.

3. Dispositif selon l'une ou l'autre des revendications 1 et 2, **caractérisé en ce que** l'ouverture de distribution (5) est prévue, en étant dirigée vers le bas, à l'extrémité d'un tube de remplissage (3) présent au niveau de l'ouverture de distribution (1), et **en ce que** la contre-plaque (7) est également agencée à l'extrémité du tube de remplissage (3) en entourant l'ouverture de distribution (5), au moins une assiette (6) de préférence réglable en hauteur étant prévue de préférence à titre de support, laquelle est attaquée de préférence par un élément élastique précontraint en direction de l'ouverture de distribution (5).

4. Dispositif selon la revendication 3, **caractérisé en ce que** plusieurs assiettes (6) sont agencées sur un bâti (8) de préférence roulant et peuvent être déplacées automatiquement en alternance jusqu'au-dessous de l'ouverture de distribution (5), les assiettes (6) étant tenues en particulier au moyen d'une tige (9) dirigée vers le bas dans une douille (10) qui est fixée sur un dispositif de convoyage (12) agencé sur le bâti (8).

5. Dispositif selon la revendication 4, **caractérisé en ce que** les douilles (10) sont agencées chacune en étant dressée autour d'un évidement (11) d'un disque circulaire (12), et les disques (12) mis en place de façon mobile dans une voie de guidage commune (13) peuvent être entraînés par au moins une roue dentée réalisée de façon complémentaire à leur périphérie, et de préférence un cylindre de levage (15) est agencé au-dessous de l'ouverture de distribution (5), qui peut être introduit depuis le bas dans la douille (10) du disque respectif (12) agencé au-dessous de l'ouverture de distribution (5) et au moyen duquel l'assiette respective (6) est déplaçable en hauteur.

6. Dispositif selon la revendication 3, **caractérisé en ce qu'**il est prévu à titre de support une bande sans fin en circulation agencée sur un bâti, qui se trouve par un tronçon respectif au-dessous de l'ouverture de distribution (5), au moins le tronçon de la bande situé au-dessous de l'ouverture de distribution (5) pouvant être soulevé et abaissé.

7. Dispositif selon l'une des revendications précédentes, **caractérisé en ce que** l'ouverture de distribution (5), y compris la contre-plaque (7), est susceptible d'être soulevée et abaissée.

8. Dispositif selon l'une des revendications précédentes, **caractérisé en ce qu'**il est prévu sur la contre-plaque (7) un dispositif de coupe (16) qui comprend un couteau (17) de préférence interchangeable déplaçable le long de la face inférieure de la contre-plaque (7) par un chariot à rouleaux (18), dans lequel est prévu en particulier un dispositif de raclage (19) comportant un racleur monté de préférence élastiquement pour le couteau (17).

9. Dispositif selon l'une des revendications 4 à 8, **caractérisé en ce que** sur le bâti (8) est réalisé au moins un poste de travail pour le prélèvement manuel des produits moulés finis depuis les assiettes (6).

10. Procédé de fabrication de produits moulés en forme de tranche à partir d'une masse capable de fluer, en particulier de tranches de viande hachée à partir d'une masse de viande hachée pour des broches de viande à racler ou écroûter, comprenant les étapes suivantes :
- on distribue la masse en portions à travers une ouverture de distribution (5), et
- on comprime la masse distribuée,
**caractérisé par** les étapes suivantes :
- on distribue la masse sur un support (6) agencé au-dessous de l'ouverture de distribution (5),
- on comprime la masse distribuée entre le support (6) et une contre-surface (7),
- on sépare la masse comprimée vis-à-vis de la contre-surface (7),
- on fait écarter le support (6) et la contre-surface (7), et
- on sépare le produit moulé fini vis-à-vis du support (6).

11. Procédé selon la revendication 10, **caractérisé en ce que** l'on fait varier la taille de la portion distribuée pour obtenir des produits moulés présentant des diamètres différents et/ou des épaisseurs différentes.

12. Procédé selon l'une ou l'autre des revendications 10 et 11, **caractérisé en ce qu'**une fois que la distribution de la masse est terminée, on soulève le support (6) depuis une position basse pour comprimer la masse.

13. Procédé selon l'une ou l'autre des revendications 10 et 11, **caractérisé en ce qu'**avant de distribuer une portion, on agence le support (6) directement au voisinage de l'ouverture de distribution (5), et **en ce que** le support (6) est poussé vers le bas par la masse distribuée à l'encontre d'une précontrainte.

14. Procédé selon l'une ou l'autre des revendications 10 et 11, **caractérisé en ce qu'**avant la distribution, on agence le support (6) à une distance de la contre-surface (7), distance qui correspond à l'épaisseur de consigne du produit moulé, et on le maintient ici pendant la distribution.

15. Procédé selon l'une des revendications 12 à 14, **caractérisé en ce que** l'on déplace l'ouverture de distribution (5) avec la contre-surface (7) à la place de ou en supplément au support (6).

16. Procédé selon l'une des revendications 10 à 15, **caractérisé en ce que** des supports vides (6) sont amenés au-dessous de l'ouverture de distribution (5) et, après finition des produits moulés, ils sont éloignés pour enlever les produits moulés, et ceci en boucle fermée.
